# EUROPÄISCHE PATENTSCHRIFT

(11) **EP 2 923 422 B1**
(45) Veröffentlichungstag und Bekanntmachung des Hinweises auf die Patenterteilung: **08.04.2020**
(21) Anmeldenummer: 13795710.6
(22) Anmeldetag: 20.11.2013
(51) Int. Cl.: H02G 5/02, H02M 7/00

(54) **STROMSCHIENENANORDNUNG UND VERFAHREN ZUR HERSTELLUNG EINER STROMSCHIENENANORDNUNG**
BUS BAR ASSEMBLY AND METHOD FOR PRODUCING A BUS BAR ASSEMBLY
ENSEMBLE RAIL CONDUCTEUR ET PROCÉDÉ DE FABRICATION D'UN ENSEMBLE RAIL CONDUCTEURENSEMBLE

(30) Priorität: 22.11.2012 DE 102012221381
(43) Veröffentlichungstag der Anmeldung: 30.09.2015
(73) Patentinhaber: Bombardier Transportation GmbH, 10785 Berlin (DE)
(72) Erfinder: LAUDAN, Adrian, CH-8107 Buchs ZH (CH); LAGGER, Stefan, CH-8307 Effretikon (CH); FAUSER, Raimund, 79804 Dogern (DE); ENZENSBERGER, Gernot, CH-5430 Wettingen (CH)
(74) Vertreter: Ramrath, Lukas
(86) Internationale Anmeldenummer: PCT/EP2013/074255
(87) Internationale Veröffentlichungsnummer: WO 2014/079863

(56) Entgegenhaltungen:
- EP-A1- 1 311 045
- WO-A1-94/29885
- FR-A1- 2 467 471
- US-B1- 6 201 722

## Beschreibung

Die Erfindung betrifft eine Stromschienenanordnung sowie ein Verfahren zur Herstellung einer Stromschienenanordnung.

Stromschienenanordnungen werden unter anderem zur elektrischen Kontaktierung von Leistungshalbleiterbauelementen eingesetzt. So können z.B. als MOSFET oder IGBT ausgebildete Leistungshalbleiterbauelemente, die z.B. Teil eines Wechselrichters sein können, mittels einer Stromschienenanordnung elektrisch kontaktiert werden.

So beschreibt die EP 0 677 916 A2 eine Stromrichteranlage mit einer ersten DC-Schiene, einer zweiten DC-Schiene und mindestens einer AC-Schiene, wobei sich Isolierschichten zwischen diesen Schichten befinden.

Die WO 01/93392 A1 offenbart ein Verbindungssystem zweier Gleichstromsysteme, welches aus zwei Kupferschienen besteht, die jeweils mit einer Isolierschicht laminiert sind.

Die EP 0 998 019 A1 offenbart eine Halbleiter-Schaltungsanordnung mit einer Zwischenkreis-Leiterplatte zur elektrischen Kontaktierung von Zwischenkreis-Bauelementen wie z.B. Kondensatoren.

Die US 2004/0062004 A1 offenbart eine elektronische Wandleranordnung mit einer ersten, einer zweiten und einer dritten Verbindungsschiene, wobei jede Verbindungsschiene mit Anschlüssen von mindestens einem ersten und einem zweiten Paar von Leistungsschalterelementen verbunden sind, wobei das erste und das zweite Paar von Leistungsschalterelementen, die mit einer bestimmten Verbindungsschiene verbunden sind, von verschiedenen Leistungsschaltermodulen sind.

Die WO 94/29885 A1 offenbart eine Sammelschienen-Anordnung mit geringer Induktivität für industrielle Spannungsniveaus und für Leistungsanwendungen, die zwei oder mehr langgestreckten elektrischen Leiterstäbe mit abgerundeten Kanten umfasst. Ein Streifen von dielektrischem Isoliermaterial ist zwischen zwei der länglichen elektrisch leitenden Schienen angeordnet.

Die EP 1 311 045 A1 offenbart eine Verteilerleitungsstruktur für eine elektrische Stromversorgung mit einem Paar von ersten Leitern und einem zweiten Leiter. Jeder der ersten Leiter ist mit einem ersten Hauptabschnitt in einer flachen Bandform und ersten Verbindungsabschnitten versehen. Der zweite Leiter ist mit einem zweiten Hauptabschnitt in einer flachen Bandform und zweiten Verbindungsabschnitten versehen. Die ersten Leiter sind miteinander an den ersten Verbindungsabschnitten verbunden. Die ersten und zweiten Hauptabschnitte sind geschichtet und durch Isolatoren voneinander getrennt.

Die FR 2 467 471 A1 offenbart eine Vorrichtung zum Halten einer Vielzahl von elektrischen Leitern. Die weist eine Reihe von Isolatoren auf, die zwischen den Leitern und zwischen Endleitern und Halterungen angeordnet sind.

Die US 6,201,722 B1 offenbart ein Stromschienenverbinder zum Verbinden von Stromschienen von benachbart angeordneten Stromrichterausstattungsschächten.

Es stellt sich das technische Problem, eine Stromschienenanordnung und ein Verfahren zur Herstellung einer Stromschienenanordnung zu schaffen, die zwischen den Leiterstrukturen der Stromschienenanordnung wirkenden Stromkräfte, insbesondere im Kurzschlussfall, minimieren, wobei ein Bauraum für die Stromschienenanordnung eingespart wird und eine unerwünschte Verformung vermieden wird.

Die Lösung des technischen Problems ergibt sich durch die Gegenstände mit den Merkmalen der Ansprüche 1 und 6. Weitere vorteilhafte Ausgestaltungen der Erfindung ergeben sich aus den Unteransprüchen.

Vorgeschlagen wird eine Stromschienenanordnung.

Es ist eine Grundidee der Erfindung, eine erste Leiterstruktur, die z.B. einen Zuleiter ausbildet, in mindestens zwei Teilleiterstrukturen aufzutrennen, wobei diese Teilleiterstrukturen derart ausgebildet und relativ zu einer zweiten Leiterstruktur, die z.B. einen Rückleiter ausbildet, angeordnet werden, dass eine auf die zweite Leiterstruktur wirkende resultierende Stromkraft, insbesondere im Kurzschlussfall, minimiert wird.

Die Stromschienenanordnung dient insbesondere zum Anschluss leistungselektronischer Halbleiterbauelemente, z.B. MOSFETs oder IGBTs. Diese Halbleiterbauelemente können z.B. Bestandteil eines Stromrichters sein, z.B. eines Leistungsstromrichters in einem Schienenfahrzeug.

Die Stromschienenanordnung umfasst eine erste Leiterstruktur und eine zweite Leiterstruktur, wobei die erste Leiterstruktur und die zweite Leiterstruktur nicht direkt oder unmittelbar elektrisch verbunden sind, insbesondere in einem unkontaktierten Zustand nicht verbunden sind. Dies bedeutet, dass ohne eine zusätzliche elektrische Verbindung der ersten und zweiten Leiterstruktur kein Stromfluss von der ersten zur zweiten Leiterstruktur oder umgekehrt erfolgen kann. Somit sind die erste und die zweite Leiterstruktur nicht galvanisch verbunden. Allerdings können die erste und die zweite Leiterstruktur selbstverständlich elektrisch, insbesondere galvanisch, verbindbar sein, z.B. über die vorhergehend erläuterte zusätzliche elektrische Verbindung. Umfassen kann hierbei bedeuten, dass die Stromschienenanordnung die erste Leiterstruktur und die zweite Leiterstruktur aufweist.

Die erste Leiterstruktur, die auch als erste Leiterschiene bezeichnet werden kann, kann z.B. als Zuleiter ausgebildet sein, die im Betrieb ein erstes elektrisches Potential aufweist. Z.B. kann die erste Leiterstruktur zur Kontaktierung eines Hochspannungsanschluss eines Brückenzweigs des Stromrichters dienen, wobei der Brückenzweig zwei Leistungshalbleiterelemente umfasst oder aufweist. Die zweite Leiterstruktur, die auch als zweite Leiterschiene bezeichnet werden kann, kann z.B. als Rückleiter ausgebildet sein, die im Betrieb ein zweites elektrisches Potential aufweist, welches von dem ersten Potential verschieden, insbesondere kleiner, ist. Z.B. kann die zweite Leiterstruktur zur Kontaktierung eines Niederspannungsanschluss der Leistungshalbleiterbrücke dienen.

Weiter umfasst die erste Leiterstruktur eine erste Teilleiterstruktur, die auch als erste Teilschiene bezeichnet werden kann, und eine zweite Teilleiterstruktur, die auch als zweite Teilschiene bezeichnet werden kann. Die erste Teilleiterstruktur und die zweite Teilleiterstruktur sind elektrisch verbunden. Somit weisen die erste und die zweite Teilleiterstruktur dasselbe elektrische Potential auf. Umfassen kann hierbei bedeuten, dass die erste Leiterstruktur die erste Teilleiterstruktur und die zweite Teilleiterstruktur aufweist.

Die erste Leiterstruktur kann hierbei einen ersten Anschluss, der auch als Eingangsanschluss bezeichnet werden kann, und einen zweiten Anschluss, der auch als Ausgangsanschluss bezeichnet werden kann, aufweisen. Hierbei kann der erste Anschluss sowohl an der ersten als auch an der zweiten Teilleiterstruktur oder ausschließlich an der ersten Teilleiterstruktur oder der zweiten Teilleiterstruktur angeordnet sein. Auch kann der zweite Anschluss sowohl an der ersten als auch an der zweiten Teilleiterstruktur oder ausschließlich an der ersten Teilleiterstruktur oder der zweiten Teilleiterstruktur angeordnet sein.

Der erste und der zweite Anschluss sind hierbei derart ausgebildet, dass die entsprechende(n) Leiter- oder Teilleiterstruktur(en) über den ersten bzw. zweiten Anschluss elektrisch kontaktierbar ist/sind.

Ebenso kann die zweite Leiterstruktur einen ersten Anschluss, der auch als Eingangsanschluss bezeichnet werden kann, und einen zweiten Anschluss, der auch als Ausgangsanschluss bezeichnet werden kann, aufweisen. Die zweite Leiterstruktur ist hierbei vorzugsweise einteilig ausgebildet.

Hierbei kann zwischen dem Ausgangsanschluss der ersten Leiterstruktur und dem Eingangsanschluss der zweiten Leiterstruktur mindestens ein elektrisches Bauelement, z.B. ein elektrischer Verbraucher, insbesondere aber auch ein Brückenzweig eines Stromrichters, angeordnet sein, wobei der Brückenzweig zwei leistungselektronische Schaltelemente umfasst oder aufweist. In diesem kontaktierten Zustand sind die erste Leiterstruktur und die zweite Leiterstruktur über das mindestens eine elektrische Bauelement elektrisch verbunden.

Die erste und die zweite Teilleiterstruktur sind derart ausgebildet und relativ zur zweiten Leiterstruktur angeordnet, dass eine erste Stromkraft zwischen der ersten Teilleiterstruktur und der zweiten Leiterstruktur eine zweite Stromkraft zwischen der zweiten Teilleiterstruktur und der zweiten Leiterstruktur zumindest teilweise kompensiert. Die Stromkraft wirkt hierbei auf die entsprechenden (Teil-)Leiterstrukturen. Die Stromkraft wird hierbei zumindest teilweise durch die Lorentz-Kraft gebildet, die bei Stromfluss durch die entsprechenden Leiterstrukturen auf diese Leiterstrukturen wirken.

Kompensieren bedeutet hierbei, dass eine bei Stromfluss auf die zweite Leiterstruktur wirkende resultierende Kraft kleiner als eine vorbestimmte Kraft, vorzugsweise Null, ist. Z.B. kann mindestens ein Anteil der von der ersten Teilleiterstruktur auf die zweite Leiterstruktur ausgeübten Stromkraft durch einen entgegengesetzt orientierten, jedoch gleich hohen, Anteil der von der zweiten Teilleiterstruktur auf die zweite Leiterstruktur ausgeübten Stromkraft kompensiert werden. Die Stromkraft kann hierbei in Bezug auf die Leiterstrukturen abschnittsweise wirken.

Die Anschlüsse der ersten Leiterstruktur und der zweiten Leiterstruktur können hierbei derart angeordnet sein, dass beim Anschluss der vorgeschlagenen Stromschienenanordnung an eine Stromversorgung und bei Herstellung einer elektrischen Verbindung zwischen der ersten und der zweiten Leiterstruktur zumindest ein Anteil eines elektrischen Stroms in einer ersten Richtung durch die erste Leiterstruktur, insbesondere durch die erste und/oder die zweite Teilleiterstruktur, fließt, wobei zumindest ein Anteil des elektrischen Stroms in einer der ersten Richtung entgegengesetzten Richtung durch die zweite Leiterstruktur fließt. Hierdurch kann die vorhergehend erläuterte Kompensation erreicht werden.

Hierdurch wird in vorteilhafter Weise eine Stromschienenanordnung geschaffen, die eine elektrische Kontaktierung von z.B. Verbrauchern oder insbesondere leistungselektronischen Bauelementen ermöglicht, wobei durch einen Stromfluss erzeugte Stromkräfte durch die physikalische Ausgestaltung und Anordnung kompensiert werden.

Weiter ist die erste Teilleiterstruktur als erste Leiterplatte und die zweite Teilleiterstruktur als zweite Leiterplatte ausgebildet. Die zweite Leiterstruktur ist als dritte Leiterplatte ausgebildet. Hierbei sind die erste, die zweite und die dritte Leiterplatte parallel und mit einem vorbestimmten Abstand zueinander angeordnet, wobei die dritte Leiterplatte zwischen der ersten und der zweiten Leiterplatte angeordnet ist.

Die einzelnen Leiterplatten können hierbei jeweils eine vorbestimmte Dimension aufweisen, insbesondere ein vorbestimmte Länge, Breite und Höhe. Die Länge bezeichnet hierbei eine Länge in einer ersten horizontalen Richtung, die als Längsrichtung bezeichnet werden kann. Die Breite bezeichnet hierbei eine Breite in einer zweiten horizontalen Richtung, die auch als Querrichtung bezeichnet werden kann, wobei die zweite horizontale Richtung in einer Ebene mit der ersten horizontalen Richtung liegt und senkrecht zu dieser orientiert ist. Die Höhe bezeichnet hierbei eine Höhe in vertikaler Richtung, die auch als Vertikalrichtung bezeichnet werden kann, wobei die Vertikalrichtung senkrecht zur Längs- und Querrichtung orientiert ist.

Die erste und/oder die zweite Leiterplatte und/oder die dritte Leiterplatte können gleiche oder verschiedene Dimensionen aufweisen. Insbesondere kann die dritte Leiterplatte eine gleiche Länge und eine gleiche Höhe wie die erste und die zweite Leiterplatte, jedoch eine von der Breite der ersten und zweiten Leiterplatte verschiedene Breite aufweisen.

Die dritte Leiterplatte kann mittig, also mit gleichem Abstand zur ersten als auch zur zweiten Leiterplatte, zwischen der ersten und der zweiten Leiterplatte angeordnet sein. Es ist jedoch auch möglich und, wie nachfolgend noch näher erläutert, in bestimmten Ausführungsformen sogar wünschenswert, dass die dritte Leiterplatte außermittig zwischen der ersten und der zweiten Leiterplatte angeordnet ist.

Der Abstand der dritten Leiterplatte von der ersten als auch von der zweiten Leiterplatte kann hierbei abhängig von einer Stärke des Stromflusses durch die erste und die zweite Leiterplatte, insbesondere im Kurzschlussfall, gewählt werden. Die Stärke des Stromflusses in der ersten Leiterplatte kann hierbei insbesondere von einer Impedanz eines ersten Strompfades vom ersten Anschluss der ersten Leiterstruktur über die erste Leiterplatte zum zweiten Anschluss der ersten Leiterstruktur und einer Impedanz eines zweiten Strompfades vom ersten Anschluss der ersten Leiterstruktur über die zweite Leiterplatte zum zweiten Anschluss der ersten Leiterstruktur abhängen.

Sind die Impedanzen des ersten und des zweiten Strompfades gleich, so wird die dritte Leiterplatte vorzugsweise mittig zwischen der ersten und der zweiten Leiterplatte angeordnet. Sind die erste und die zweite Impedanz ungleich, so wird die dritte Leiterplatte hin zu derjenigen Leiterplatte außerhalb der Mitte versetzt angeordnet, deren Impedanz höher ist. Durch die höhere Impedanz wird eine Stärke des Stromflusses im Vergleich zu dem Strompfad mit der niedrigeren Impedanz verringert, so dass geringere Stromkräfte wirken. Um die erfindungsgemäße Kompensation zu ermöglich, ist daher ein Abstand zu derjenigen Leiterplatte geringer zu wählen, die den Strom mit der niedrigeren Stromstärke trägt.

Ist der Abstand der dritten Leiterplatte sowohl von der ersten als auch von der zweiten Leiterplatte z.B. durch äußere Rahmenbedingungen fest vorgegeben, so kann jedoch selbstverständlich eine Ausbildung, insbesondere eine Dimensionierung, der ersten und zweiten Leiterplatte sowie von Elementen zur elektrischen Verbindung dieser Leiterplatten derart gewählt werden, dass die vorhergehend erläuterten Strompfade eine Impedanz aufweisen, dass eine Stärke des Stromflusses durch die erste und die zweite Leiterplatte, insbesondere im Kurzschlussfall, derart erfolgt, dass die erfindungsgemäße Kompensation gewährleistet ist.

Hierdurch wird in vorteilhafter Weise eine Stromschienenanordnung mit einer niedrigen Induktivität geschaffen, die eine einfach zugängliche Kontaktierung von elektrischen Bauelementen ermöglicht, eine ausreichend gute Stromtragfähigkeit aufweist und die die vorhergehend erläuterte vorteilhafte Kompensation von Kräften ermöglicht.

Simulationen haben hierbei gezeigt, dass in vorteilhafter Weise eine Induktivität der erfindungsgemäßen Stromschienenanordnung mit steigender Frequenz abnimmt. Ein Widerstand nimmt mit steigender Frequenz zu. Wirkende Stromkräfte sind jedoch nahezu frequenzunabhängig.

Weiter ist zwischen der ersten Leiterplatte und der dritten Leiterplatte ein erster Abstandshalter und/oder zwischen der zweiten Leiterplatte und der dritten Leiterplatte ein zweiter Abstandshalter angeordnet. Der/die Abstandshalter kann/können hierbei aus einem elektrisch isolierenden Material ausgebildet sein. Es ist möglich, dass der erste Abstandshalter mechanisch an der dritten Leiterplatte und/oder der ersten Leiterplatte befestigt ist. Auch der zweite Abstandshalter kann an der dritten Leiterplatte und/oder der zweiten Leiterplatte mechanisch befestigt sein. Somit kann der Abstandshalter eine mechanische Verbindung zwischen der ersten und der dritten Leiterplatte und/oder der zweiten und der dritten Leiterplatte herstellen.

Insbesondere ist der erste Abstandshalter und/oder der zweite Abstandshalter derart angeordnet und ausgebildet, dass vorbestimmte minimale Stromkriechstrecken und vorbestimmte minimale Luftstrecken zwischen der dritten Leiterplatte und der ersten und/oder der zweiten Leiterplatte gewährleistet werden.

Durch die vorgeschlagenen Abstandshalter ergibt sich in vorteilhafter Weise, dass vorbestimmte und für die erfindungsgemäße Kompensation von Stromkräften erforderliche Abstände zwischen den Leiterplatten eingehalten werden. Bei einer unvollständigen Kompensation von Stromkräften können die vorgeschlagenen Abstandshalter weiter zur Aufnahme einer verbleibenden resultierenden Kraft auf z.B. die dritte Leiterplatte dienen.

Weiter sind die erste Leiterplatte und die zweite Leiterplatte mechanisch miteinander verbunden. Die mechanische Verbindung kann hierbei derart ausgelegt werden, dass vorbestimmte Kräfte durch die mechanische Verbindung aufgenommen werden können. Die mechanische Verbindung kann hierbei zusätzlich zumindest einen Teil der vorhergehend erläuterten elektrischen Verbindung zwischen der ersten und der zweiten Leiterplatte ausbilden.

Es ist möglich, dass Stromkräfte derart auf die Leiterplatten wirken, dass die erste Leiterplatte von der dritten Leiterplatte und die zweite Leiterplatte von der dritten Leiterplatte jeweils abgestoßen wird. Sind die erste und die zweite Leiterplatte mechanisch miteinander verbunden, so werden durch die mechanische Verbindung die auf die erste und zweite Leiterplatte wirkenden Kräfte aufgenommen, sodass eine ungewünschte Verformung bzw. Bewegung oder gar Zerstörung der ersten und der zweiten Leiterplatte vermieden wird.

Weiter sind die erste Leiterplatte und die zweite Leiterplatte
durch ein Verbindungsmittel mechanisch verbunden, wobei sich das Verbindungsmittel durch eine Öffnung der dritten Leiterplatte erstreckt. Beispielsweise können die erste Leiterplatte und die zweite Leiterplatte miteinander verschraubt sein. Die Verschraubung dient hierbei der mechanischen Verbindung. Ist das Verbindungsmittel, z.B. eine Schraube, aus einem elektrisch leitfähigen Material ausgebildet, so kann gleichzeitig zur mechanischen Verbindung eine elektrische Verbindung zwischen der ersten und der zweiten Leiterplatte mittels der Mittel zur Verschraubung hergestellt werden. Es ist jedoch auch vorstellbar, ein mechanisches Verbindungsmittel mit einer vorbestimmten niedrigen Leitfähigkeit, z.B. eine Schraube, und ein elektrischen Verbindungsmittel, z.B. ein rohrförmigen Leiter mit einer vorbestimmten hohen Leitfähigkeit, zu kombinieren, um die erste Leiterplatte und die zweite Leiterplatte mechanisch und elektrisch zu verbinden, wobei sich sowohl das mechanische Verbindungsmittel als auch das elektrische Verbindungsmittel durch eine gemeinsame Öffnung oder durch verschiedene Öffnungen der dritten Leiterplatte erstrecken können. So kann z.B. das mechanische Verbindungsmittel innerhalb eines elektrischen Verbindungsmittels, z.B. innerhalb des vorhergehend erwähnten rohrförmigen Leiters, oder umgekehrt angeordnet werden. Hierbei ist die elektrische Leitfähigkeit des elektrischen Verbindungsmittels höher als die elektrische Leitfähigkeit des mechanischen Verbindungsmittels.

Werden die erste und die zweite Leiterplatte z.B. mittels einer Schraube miteinander verschraubt, so kann sich diese Schraube durch eine Öffnung der dritten Leiterplatte erstrecken.

Hierbei weist also die dritte Leiterplatte in einem vorbestimmten Bereich der dritten Leiterplatte eine Öffnung auf, deren Dimension größer ist als ein Durchmesser des mechanischen und/oder des elektrischen Verbindungsmittels. Durch dieses Loch kann sich das mechanische und/oder elektrische Verbindungsmittel erstrecken. Selbstverständlich ist es auch möglich, dass sich das mechanische und/oder elektrische Verbindungsmittel, insbesondere ein kopfseitiges Ende des mechanischen und/oder elektrischen Verbindungsmittels, durch eine Öffnung der ersten Leiterplatte und ein fußseitiges Ende des mechanischen und/oder elektrischen Verbindungsmittels durch eine Öffnung der zweiten Leiterplatte erstreckt. Das mechanische und/oder elektrische Verbindungsmittels kann hierbei in vorbestimmten Teilbereichen der ersten und der zweiten Leiterplatte angeordnet sein. Hierdurch wird eine optimale Kraftaufnahme und/oder eine gewünschte Stromflussverteilung durch das mechanische und/oder elektrische Verbindungsmittel ermöglicht.

Eine Verschraubung ermöglicht hierbei in vorteilhafter Weise eine möglichst belastbare mechanische Verbindung zwischen der ersten und der zweiten Leiterplatte und somit eine hohe Stabilität, insbesondere im Kurzschlussfall, der vorgeschlagenen Stromschienenanordnung.

Selbstverständlich kann das Verbindungsmittel auch als Stab, z.B. als Metallstab ausgebildet sein, der z.B. mit der ersten und der zweiten Leiterplatte verlötet oder verschweißt oder in einer sonstigen Weise mechanisch verbunden ist.

Erfindungsgemäß erstreckt sich ein Teil einer Abstandshalteranordnung durch die Öffnung der dritten Leiterplatte, wobei die Abstandshalteranordnung den ersten Abstandshalter und den zweiten Abstandshalter umfasst.

Insgesamt ergibt sich eine Stromschienenanordnung, welche eine Reduktion von Kräften zwischen verschiedenpoligen Leiterstrukturen ermöglicht. So ist die erste Leiterstruktur, die eine erste Polarität bzw. ein erstes Potential aufweisen kann, auf zwei Teilleiterstrukturen aufgeteilt, wobei die zweite Leiterstruktur, die eine von der ersten Polarität verschiedene Polarität bzw. ein von dem ersten Potential verschiedenes Potential aufweisen kann, räumlich zwischen den beiden Teilleiterstrukturen der ersten Leiterstruktur angeordnet. Weiter sind elektrisch nur die Teilleiterstrukturen der ersten Leiterstruktur galvanisch miteinander verbunden, jedoch nicht die erste Leiterstruktur und die zweite Leiterstruktur.

In einer weiteren Ausführungsform sind die erste und die zweite Teilleiterstruktur derart ausgebildet und relativ zur zweiten Leiterstruktur angeordnet, dass die erste Stromkraft die zweite Stromkraft zumindest teilweise kompensiert, falls die erste Leiterstruktur und die zweite Leiterstruktur kurzgeschlossen sind und/oder ein Stromfluss durch die erste Leiterstruktur und die zweite Leiterstruktur eine vorbestimmte Frequenz aufweist. In dem kurzgeschlossenen Zustand sind die erste und die zweite Leiterstruktur elektrisch, insbesondere galvanisch verbunden, z.B. über eine zusätzliche elektrische Verbindung.

Insbesondere im Kurzschlussfall können auf Stromschienen aufgrund der hohen Stromstärken so genannten Kurzschluss-Stoßkräfte wirken, die zu einer Zerstörung der Stromschienenanordnung führen können. Diese Kurzschlussströme können hierbei, je nach Anwendungsfall, eine vorbestimmte Frequenz, z.B. 3 kHz, aufweisen.

Durch die vorgeschlagene Stromschienenanordnung wird also in besonders vorteilhafter Weise die Auswirkung der aufgrund hoher Stromstärken erzeugten hohen Stromkräfte kompensiert.

In einer weiteren Ausführungsform sind die erste und die zweite Leiterplatte über eine Verbindungsplatte verbunden, wobei die Verbindungsplatte derart angeordnet ist, dass die Anordnung aus der ersten und der zweiten Leiterplatte sowie der Verbindungsplatte ein U-Profil in einem Querschnitt aufweist. Dies kann auch bedeuten, dass die Anordnung aus der ersten und der zweiten Leiterplatte sowie der Verbindungsplatte im Querschnitt ein U-Profil bildet oder ausbildet. Die Verbindungsplatte kann hierbei aus einem elektrisch leitfähigen Material ausgebildet sein, insbesondere aus dem gleichen Material wie die erste und die zweite Leiterplatte. Sie dient in diesem Fall in vorteilhafter Weise sowohl einer elektrischen als auch einer mechanischen Verbindung. Somit ist es möglich, dass die Verbindungsplatte in der vorhergehend erwähnten Querrichtung neben der dritten Leiterplatte angeordnet ist, wobei die erste Leiterplatte über der dritten Leiterplatte und die zweite Leiterplatte unter der dritten Leiterplatte in der vorhergehend erläuterten Vertikalrichtung angeordnet sind. Die Verbindungsplatte kann hierbei in vorteilhafter Weise derart angeordnet und ausgebildet sein, dass sich eine homogene Verteilung eines Stromflusses in der ersten und der zweiten Leiterplatte ergibt, insbesondere ein homogener Fluss des Gleichanteils des Stromes.

In einer weiteren Ausführungsform ist das Verbindungsmittel, mittels dem die erste und die zweite Leiterplatte miteinander mechanisch verbunden sind, in einem Verbindungskanal einer Abstandshalteranordnung angeordnet. Die Abstandshalteranordnung umfasst den vorhergehend erläuterten ersten Abstandshalter und den zweiten Abstandshalter oder bildet diese aus oder weist diese auf. Somit kann die Abstandshalteranordnung einen Verbindungskanal aufweisen, der elektrisch von der dritten Leiterplatte isoliert ist. Auch ein Teil der Abstandshalteranordnung kann sich hierbei durch die vorhergehend erläuterte Öffnung der dritten Leiterplatte erstrecken. Umfassen kann bedeuten, dass die Abstandshalteranordnung den vorhergehend erläuterten ersten Abstandshalter und den zweiten Abstandshalter aufweist.

Hierdurch ergibt sich in vorteilhafter Weise eine bauraumeinsparende Ausführung der Stromschienenanordnung, die gleichzeitig eine mechanische Verbindung der ersten und der zweiten Leiterplatte ermöglicht, wobei das Verbindungsmittel elektrisch gegenüber der dritten Leiterplatte isoliert ist.

In einer weiteren Ausführungsform ist eine Höhe der zweiten Leiterplatte verschieden von einer Höhe der ersten Leiterplatte. Durch die Höhe der ersten und der zweiten Leiterplatte kann in vorteilhafter Weise eine Impedanz der vorhergehend erläuterten Strompfade durch die erste Leiterstruktur variiert werden. Ist z.B. der erste Anschluss als auch der zweite Anschluss der ersten Leiterstruktur ausschließlich an der ersten Leiterplatte angeordnet, so kann durch eine geringere Höhe der ersten Leiterplatte im Vergleich zur zweiten Leiterplatte ein Stromfluss gleichmäßiger auf die erste und die zweite Leiterplatte verteilt werden. Dies ermöglicht in vorteilhafter Weise eine vollständigere Kompensation von Stromkräften.

Weiter vorgeschlagen wird ein Verfahren zur Herstellung einer Stromschienenanordnung, wie in Anspruch 6 definiert.

Das vorgeschlagene Verfahren ermöglicht in vorteilhafter Weise die Herstellung der vorhergehend erläuterten Stromschienenanordnung.

Weiter beschrieben wird ein Verfahren zur elektrischen Kontaktierung mindestens eines elektrischen Bauelements, wobei ein erster Anschluss einer ersten Leiterstruktur der vorhergehend beschriebenen Stromschienenanordnungen mit einer elektrischen Energiequelle verbunden wird, wobei ein zweiter Anschluss der ersten Leiterstruktur mit einem ersten Anschluss des elektrischen Bauelements und ein erster Anschluss einer zweiten Leiterstruktur mit einem zweiten Anschluss des elektrischen Bauelements verbunden wird, wobei ein zweiter Anschluss der zweiten Leiterstruktur mit einem zweiten Anschluss der elektrischen Energiequelle verbunden wird. Hierdurch ergibt sich in vorteilhafter Weise eine einfache, jedoch insbesondere mit Hinsicht auf wirkende Stromkräfte sichere elektrische Kontaktierung des elektrischen Bauelements.

Die Erfindung wird anhand mehrerer Ausführungsbeispiele näher erläutert. Die Fig. zeigen:
- Fig. 1a: eine perspektivische Ansicht einer Stromschienenanordnung in einer ersten Ausführungsform,
- Fig. 1b: einen Querschnitt durch die in Fig. 1a dargestellte Stromschienenanordnung,
- Fig. 2a: eine perspektivische Ansicht einer Stromschienenanordnung in einer zweiten Ausführungsform,
- Fig. 2b: einen Querschnitt durch die in Fig. 2a dargestellte Stromschienenanordnung,
- Fig. 3a: eine perspektivische Ansicht einer Stromschienenanordnung in einer dritten Ausführungsform,
- Fig. 3b: einen Querschnitt durch die in Fig. 3a dargestellte Stromschienenanordnung,
- Fig. 4a: eine perspektivische Ansicht einer Stromschienenanordnung in einer vierten Ausführungsform,
- Fig. 4b: einen Querschnitt durch die in Fig. 4a dargestellte Stromschienenanordnung,
- Fig. 5a: eine perspektivische Ansicht einer Stromschienenanordnung in einer fünften Ausführungsform,
- Fig. 5b: einen Querschnitt durch die in Fig. 5a dargestellte Stromschienenanordnung,
- Fig. 6: einen Querschnitt durch eine Stromschienenanordnung in einer sechsten Ausführungsform,
- Fig. 7a: eine perspektivische Ansicht einer Stromschienenanordnung in einer siebten Ausführungsform,
- Fig. 7b: einen Querschnitt durch die in Fig. 7a dargestellte Stromschienenanordnung,
- Fig. 8a: eine perspektivische Ansicht einer Stromschienenanordnung in einer achten Ausführungsform,
- Fig. 8b: einen Querschnitt durch die in Fig. 8a dargestellte Stromschienenanordnung,
- Fig. 9a: eine perspektivische Ansicht einer Stromschienenanordnung in einer neunten Ausführungsform,
- Fig. 9b: einen Querschnitt durch die in Fig. 9a dargestellte Stromschienenanordnung,
- Fig. 10a: eine perspektivische Ansicht einer Stromschienenanordnung in einer zehnten Ausführungsform,
- Fig. 10b: einen Querschnitt durch die in Fig. 10a dargestellte Stromschienenanordnung,
- Fig. 11a: eine perspektivische Ansicht einer Stromschienenanordnung in einer elften Ausführungsform,
- Fig. 11b: einen Querschnitt durch die in Fig. 11a dargestellte Stromschienenanordnung und
- Fig. 12: einen Querschnitt durch eine Stromschienenanordnung in einer zwölften Ausführungsform.

Nachfolgend bezeichnen gleiche Bezugszeichen Elemente mit gleichen oder ähnlichen technischen Merkmalen.

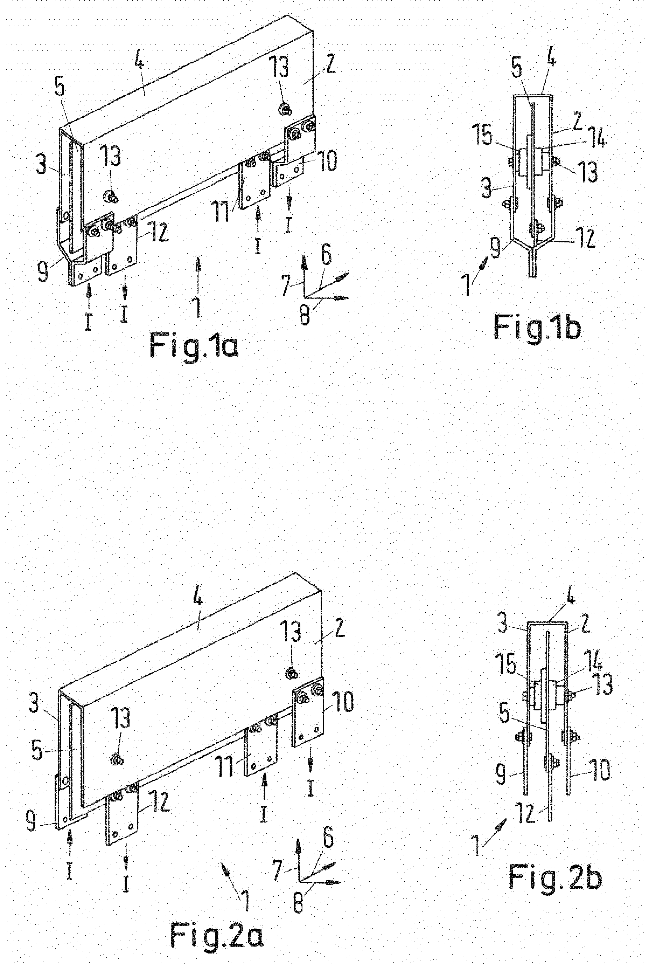

In Fig. 1a ist eine perspektivische Ansicht einer Stromschienenanordnung 1 in einer ersten Ausführungsform dargestellt. Die Stromschienenanordnung 1 umfasst eine erste Leiterplatte 2 und eine zweite Leiterplatte 3. Die erste und die zweite Leiterplatte 2, 3 sind mechanisch und elektrisch mittels einer Verbindungsplatte 4 miteinander verbunden. Eine dritte Leiterplatte 5 ist elektrisch nicht mit der ersten und der zweiten Leiterplatte 2, 3 verbunden und zwischen der ersten und der zweiten Leiterplatte 2, 3 angeordnet. Hierbei sind die erste, die zweite und die dritte Leiterplatte 2, 3, 5 parallel angeordnet. Dargestellt ist weiter eine Längsrichtung durch einen Pfeil 6. Ebenfalls dargestellt ist eine Querrichtung durch einen Pfeil 7 und eine Vertikalrichtung durch einen Pfeil 8. Die erste Leiterplatte 2 ist hierbei in der Vertikalrichtung 8 mit einem vorbestimmten Abstand von der dritten Leiterplatte 5 beabstandet angeordnet. Ebenso ist die dritte Leiterplatte 5 von der zweiten Leiterplatte 3 mit einem vorbestimmten Abstand in der Vertikalrichtung 8 beabstandet angeordnet. Hierbei ist die dritte Leiterplatte 5 mittig zwischen der ersten und der zweiten Leiterplatte 2, 3 angeordnet. Hierbei ist dargestellt, dass die Leiterplatten 2, 3, 5 eine gleiche Länge in Längsrichtung 6, eine gleiche Breite in Querrichtung 7 und eine gleiche Höhe in Vertikalrichtung 8 aufweisen, wobei die dritte Leiterplatte 5 in der Querrichtung 7 mit einem vorbestimmten Versatz zu der ersten und der zweiten Leiterplatte 2, 3 angeordnet ist, sodass die dritte Leiterplatte 5 aus einem zwischen der ersten und der zweiten Leiterplatte 2, 3 angeordneten Volumen auf einer Seite herausragt, die der Seite der Verbindungsplatte 4 gegenüberliegt.

Weiter dargestellt ist ein erster Anschluss 9 der durch die erste Leiterplatte 2, die zweite Leiterplatte 3 und die Verbindungsplatte 4 gebildeten ersten Leiterstruktur der Stromschienenanordnung 1. Der erste Anschluss 9 ist hierbei Y-förmig ausgebildet, wobei ein erster Schenkel des ersten Anschlusses 9 mittels Schrauben an der ersten Leiterplatte 2 befestigt ist und ein zweiter Schenkel des Anschlusses 9 mittels Schrauben an der zweiten Leiterplatte 3 befestigt ist. Mittels des Anschlusses 9 wird also gleichzeitig die erste Leiterplatte 2 als auch die zweite Leiterplatte 3 elektrisch kontaktiert. Dargestellt ist eine Richtung eines Stromes I, der durch den ersten Anschluss 9 in die erste und zweite Leiterplatte 2, 3 hineinfließt. Weiter dargestellt ist ein ebenfalls Y-förmig ausgebildeter zweiter Anschluss 10 der ersten Leiterstruktur, wobei wiederum ein erster Schenkel des zweiten Anschlusses 10 mittels Schrauben an der ersten Leiterplatte 2 und ein zweiter Schenkel des Anschlusses 10 mittels Schrauben an der zweiten Leiterplatte 3 befestigt ist. Der Strom I fließt im dargestellten Beispiel durch den zweiten Anschluss 10 aus der ersten und zweiten Leiterplatte 2, 3 heraus. Der erste Anschluss 9 ist hierbei an einem in Längsrichtung 6 vorderen Ende der Leiterplatten 2, 3 angeordnet. Der zweite Anschluss 10 ist hierbei an einem in Längsrichtung 6 hinteren Ende der Leiterplatten 2, 3 angeordnet. Weiter dargestellt ist ein plattenförmiger oder zungenförmiger erster Anschluss 11 der dritten Leiterplatte 5, der mittels Schrauben an der dritten Leiterplatte 5 befestigt ist. Weiter dargestellt ist ein zweiter Anschluss 12 der dritten Leiterplatte 5, die ebenfalls mittels Schrauben an der dritten Leiterplatte 5 befestigt ist. Hierbei ist dargestellt, dass der Strom I durch den ersten Anschluss 11 der dritten Leiterplatte 5 in diese hinein fließt und durch den zweiten Anschluss 12 der dritten Leiterplatten 5 aus dieser heraus fließt. Der erste Anschluss 11 ist hierbei an einem in Längsrichtung 6 hinteren Ende der dritten Leiterplatte 5 angeordnet. Der zweite Anschluss 12 ist hierbei an einem in Längsrichtung 6 vorderen Ende der dritten Leiterplatten 5 angeordnet.

Zwischen dem zweiten Anschluss 10 der ersten und zweiten Leiterplatte 2, 3 und dem ersten Anschluss 11 der dritten Leiterplatte 5 kann ein elektrisches Bauelement, insbesondere eine zwei leistungselektronische Schaltelemente umfassende Halbbrücke eines Stromrichters, angeschlossen werden. Im dargestellten Beispiel fließt ein Strom durch die von der ersten und zweiten Leiterplatte 2, 3 und der Verbindungsplatte 4 gebildete erste Leiterstruktur zumindest teilweise in der in Fig. 1a dargestellten Längsrichtung 6. Aufgrund der Anordnung der Anschlüsse 9, 10, 11, 12 und der elektrischen Verbindung der ersten Leiterstruktur und der dritten Leiterplatte 5 fließt der Strom I durch die dritte Leiterplatte 5 zumindest teilweise entgegen der Längsrichtung 6. Wird angenommen, dass sich die erste Leiterplatte 2 und die dritte Leiterplatte 5 abstoßen, wenn der Strom I in entgegengesetzter Richtung durch diese Leiterplatten 2, 5 fließt, und sich, in entsprechender Weise, auch die zweite Leiterplatte 3 und die dritte Leiterplatte 5 abstoßen, so ist eine in Vertikalrichtung 8 auf die dritte Leiterplatte 5 wirkende Stromkraft im Idealfall null. Teilt sich der Strom I nämlich symmetrisch, also in gleichen Teilen, auf die erste und die zweite Leiterplatte 2, 3 auf, so ist eine Stärke der Kraft in Vertikalrichtung 8, die von der ersten Leiterplatte 2 auf die dritte Leiterplatte 5 ausgeübt wird, gleich groß wie die Stromkraft, die von der zweiten Leiterplatte 3 auf die dritte Leiterplatte 5 ausgeübt wird, jedoch in entgegengesetzter Richtung orientiert.

Weiter dargestellt sind Verbindungsschrauben 13, mittels derer zwei erste Abstandshalter 14 (siehe Fig. 1b) zwischen der ersten Leiterplatte 2 und der dritten Leiterplatte 5 angeordnet sind.

In Fig. 1b ist die in Fig. 1a dargestellte Stromschienenanordnung im Querschnitt dargestellt, wobei eine Querschnittsebene senkrecht zur in Fig. 1 dargestellten Längsrichtung 6 orientiert ist. Hierbei sind insbesondere der vorhergehend erwähnte erste Abstandshalter 14 und ein zweiter Abstandshalter 15, der zwischen der zweiten Leiterplatte 3 und der dritten Leiterplatte 5 angeordnet ist, dargestellt. Weiter dargestellt ist, dass die Anordnung aus der ersten Leiterplatte 2, der zweiten Leiterplatte 3 und der Verbindungsplatte 4 in dieser Querschnittsebene ein U-Profil ausbildet.

In Fig. 2a ist eine Stromschienenanordnung 1 in einer zweiten Ausführungsform perspektivisch dargestellt. Im Unterschied zu der in Fig. 1 dargestellten Ausführungsform der Stromschienenanordnung 1 weist die Stromschienenanordnung 1 einen ersten Anschluss 9 der von der ersten Leiterplatte 2, der zweiten Leiterplatte 3 und der Verbindungsplatte 4 ausgebildeten ersten Leiterstruktur auf, der ausschließlich an einem in Längsrichtung 6 vorderen Ende der zweiten Leiterplatte 3 angeordnet ist und durch Schrauben mechanisch mit dieser verbunden ist. Dies resultiert in einer unsymmetrischen Einströmung eines Stromes I. Ebenfalls ist der zweite Anschluss 10 ausschließlich an einem in Längsrichtung 6 hinteren Ende der erste Leiterplatte 2 der ersten Leiterstruktur angeordnet, wobei der zweite Anschluss 10 mittels Schrauben mit dieser Leiterplatte 2 verbunden ist. Der Strom I wird hierbei durch den ersten Anschluss 9 in die zweite Leiterplatte 3, insbesondere in einen in Längsrichtung 6 vorderen Bereich der zweiten Leiterplatte 3 einströmen und dann über die Verbindungsplatte 4 in einen in Längsrichtung 6 hinteren Bereich der ersten Leiterplatte 2 zum zweiten Anschluss 10 strömen. Strömt der Strom I durch den ersten Anschluss 11 der dritten Leiterplatte 5 in diese ein und durch den zweiten Anschluss 12 wieder aus dieser Leiterplatte 5 heraus, so wird im in Längsrichtung 6 vorderen Bereich der Stromschienenanordnung 1 in der dargestellten Ausführungsform eine abstoßende Stromkraft von der zweiten Leiterplatte 3 auf die dritte Leiterplatte 5 ausgeübt, die in diesem Bereich nicht im gleichen Maße von der ersten Leiterplatte 2 auf die dritte Leiterplatte 5 ausgeübt wird, da im in Längsrichtung 6 vorderen Bereich der ersten Leiterplatte 2 eine Stärke des Stromflusses kleiner ist. Entsprechend wird im in Längsrichtung 6 hinteren Teil der ersten Leiterplatte 2 eine Stromkraft von der ersten Leiterplatte 2 auf die dritte Leiterplatte 5 ausgeübt, die größer ist als eine von der zweiten Leiterplatte 3 in diesem hinteren Bereich auf die dritte Leiterplatte 5 ausgeübten Stromkraft. Hierbei sind die in Fig. 2b dargestellten Abstandshalter 14, 15 jedoch derart ausgebildet und angeordnet, dass das hierdurch erzeugte Drehmoment um eine Achse in Querrichtung 7 abgefangen wird.

In Fig. 2b ist ein Querschnitt durch die in Fig. 2a dargestellte Stromschienenanordnung 1 dargestellt. Hierbei ist insbesondere ersichtlich, dass ein erster Abstandshalter 14 zwischen der ersten Leiterplatte 2 und der dritten Leiterplatte 5 angeordnet ist. Ein zweiter Abstandshalter 15 ist zwischen der zweiten Leiterplatte 3 und der dritten Leiterplatte 5 angeordnet.

Hierbei ist zu beachten, dass die in Fig. 1a und Fig. 2a dargstellten Stromschienenanordnungen 1 jeweils zwei in Längsrichtung 6 mit einem vorbestimmten Abstand beabstandeten Abstandshalter 14, 15 aufweisen.

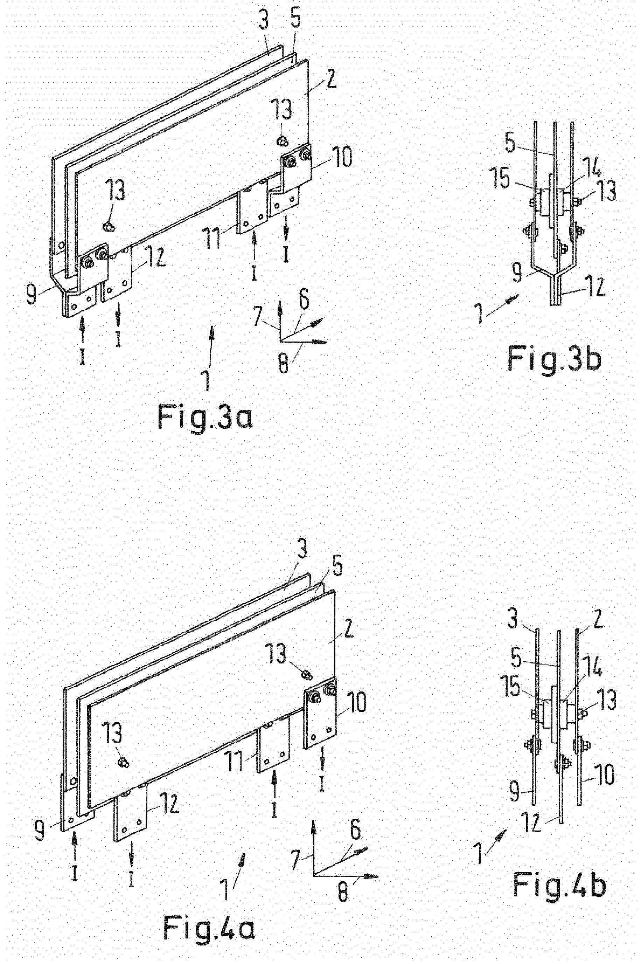

In Fig. 3a ist eine Stromschienenanordnung 1 in einer dritten Ausführungsform dargestellt. Im Unterschied zu der in Fig. 1a dargestellten Stromschienenanordnung 1 weist die in Fig. 3a dargestellte Stromschienenanordnung 1 keine Verbindungsplatte 4 auf. Eine elektrische Verbindung der ersten und der zweiten Leiterplatte 2, 3 wird hierbei insbesondere durch die Y-förmig ausgebildeten Anschlüsse 9, 10 der ersten und zweiten Leiterplatte 2, 3 hergestellt, die eine gleichzeitige elektrische Kontaktierung sowohl der ersten Leiterplatte 2 als auch der zweiten Leiterplatte 3 ermöglichen.

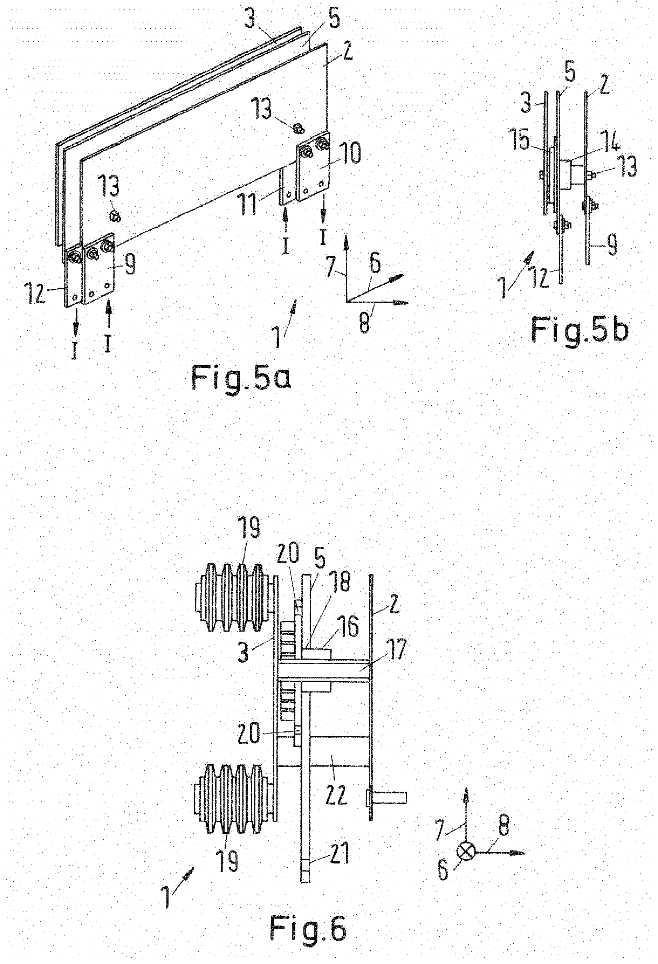

Zusätzlich kann, wie insbesondere in Fig. 6 detailliert dargestellt, die erste Leiterplatte 2 mit der zweiten Leiterplatte 3 durch Schrauben 13 verbunden sein. Hierbei können sich die Schrauben 13 durch Verbindungskanäle 17 (siehe Fig. 6) erstrecken, wobei die Verbindungskanäle 17 von Abstandshalteranordnungen 16, die jeweils sowohl den ersten Abstandshalter 14 und den zweiten Abstandshalters 15 (siehe Fig. 3b) umfassen, ausgebildet werden.

In Fig. 3a ist dargestellt, dass eine Breite in Querrichtung 7 der dritten Leiterplatte 5 größer ist als Breiten der ersten und der zweiten Leiterplatte 2, 3 in dieser Querrichtung 7.

In Fig. 3b ist ein Querschnitt durch die in Fig. 3 dargestellte Stromschienenanordnung 1 dargestellt. Hierbei ist insbesondere eine der vorhergehend erläuterten Abstandshalteranordnungen 16 (siehe Fig. 6), die sowohl den ersten Abstandshalter 14 als auch den zweiten Abstandshalter 15 umfasst, dargestellt. Sowohl der erste Abstandshalter 14 als auch der zweite Abstandshalter 15 weisen einen Verbindungskanal auf, durch den sich die Schraube 13 erstreckt. Die dritte Leiterplatte 5 weist eine Öffnung 18 (siehe Fig. 6) auf, wobei sich die Schraube 13 durch diese Öffnung 18 erstreckt. Auch ein Teil der Abstandshalteranordnung 16 erstreckt sich durch die Öffnung 18, wobei die Abstandshalteranordnung 16 die Schraube 13 elektrisch gegenüber der dritten Leiterplatte 5 isoliert. Die Schraube 13 dient somit neben der mechanischen Verbindung der ersten und der zweiten Leiterplatte 2, 3 auch einer elektrischen Verbindung der ersten und der zweiten Leiterplatte 2, 3, die zusätzlich zu der von den Anschlüssen 9, 10 gebildeten elektrischen Verbindung vorgesehen ist.

In Fig. 4a ist eine perspektivische Ansicht einer Stromschienenanordnung 1 in einer vierten Ausführungsform dargestellt. Im Unterschied zu der in Fig. 2a dargestellten Stromschienenanordnung 1 umfasst die in Fig. 4a dargestellte Stromschienenanordnung 1 ebenfalls keine Verbindungsplatte 4. Ansonsten sind die in Fig. 2a und Fig. 4a dargestellten Stromschienenanordnungen 1 gleich aufgebaut. Daher wird auf die entsprechenden Erläuterungen zu Fig. 2a verwiesen.

Wie in Bezug auf Fig. 3a erläutert, sind in Fig. 4a die erste Leiterplatte 2 und die zweite Leiterplatte 3 zumindest durch Schrauben 13 sowohl mechanisch als auch elektrisch verbunden. Die Schrauben 13 erstrecken sich hierbei durch die von jeweils einem ersten Abstandshalter 14 und einem zweiten Abstandshalter 15 gebildete Abstandshalteranordnungen 16, die jeweils einen Verbindungskanal 17 aufweisen. Zusätzlich zu den Schrauben 13 können weitere Verbindungselemente, z.B. Kupferrohre 22 (siehe Fig. 6), die sich ebenfalls durch Öffnungen der dritten Leiterplatte 5 erstrecken und sowohl die erste als auch die zweite Leiterplatte 2, 3 kontaktieren, vorgesehen werden.

In Fig. 4b ist ein Querschnitt durch die in Fig. 4a dargestellte Stromschienenanordnung 1 dargestellt. Hierbei ist insbesondere der erste Abstandshalter 14 und der zweite Abstandshalter 15 dargestellt sowie die unsymmetrische Einströmung eines Stromes I durch den ersten Anschluss 9, der ausschließlich an einem in Längsrichtung 6 vorderen Ende der zweiten Leiterplatte 3 angeordnet ist. Auch dargestellt ist die unsymmetrische Ausströmung des Stromes I durch den zweiten Anschluss 10, der ausschließlich an einem in Längsrichtung 6 hinteren Ende der ersten Leiterplatte 2 angeordnet ist.

In Fig. 5a ist eine Stromschienenanordnung 1 in einer fünften Ausführungsform dargestellt. Hierbei ist dargestellt, dass die dritte Leiterplatte 5, im Unterschied zu dem in den in Fig. 1a bis 4a dargestellten Ausführungsformen, außermittig zwischen der ersten und der zweiten Leiterplatte 2, 3 angeordnet ist. Hierbei ist die dritte Leiterplatte 5 näher an der zweiten Leiterplatte 3 als an der ersten Leiterplatte 2 angeordnet. Weiter dargestellt ist, dass ein erster Anschluss 9 der ersten Leiterstruktur ausschließlich an einem in Längsrichtung 6 vorderen Ende der ersten Leiterplatte 2 angeordnet ist und diese kontaktiert. Ebenfalls kontaktiert ein zweiter Anschluss 10 der ersten Leiterstruktur ausschließlich ein in Längsrichtung 6 hinteres Ende der ersten Leiterplatte 2. Eine elektrische Verbindung zwischen der ersten und der zweiten Leiterplatte 2, 3 wird, wie vorhergehend erläutert, zumindest teilweise durch Schrauben 13 hergestellt, die sich jeweils in einem Verbindungskanal 17 (siehe Fig. 6) mindestens einer Abstandshalteranordnung 16 erstrecken, die sich aus einem ersten Abstandshalter 14 und einem zweiten Abstandshalter 15 zusammensetzt.

In Fig. 5b ist insbesondere dargestellt, dass die erste Leiterplatte 2 in Vertikalrichtung 8 eine geringere Höhe aufweist als die zweite Leiterplatte 3. Hierdurch wird eine Impedanz der ersten Leiterplatte 2 im Vergleich zur zweiten Leiterplatte 3 erhöht. Ein erster Strompfad führt hierbei über den ersten Anschluss 9 über die erste Leiterplatte 2 zum zweiten Anschluss 10 der ersten Leiterstruktur. Ein zweiter Strompfad führt vom ersten Anschluss 9 der ersten Leiterstruktur z.B. über die Schrauben 13 und gegebenenfalls weitere elektrische Verbindungselemente über die zweite Leiterplatte 3 zum zweiten Anschluss 10 der ersten Leiterstruktur. Trotz der dünneren Ausbildung der ersten Leiterplatte 2 im Vergleich zur zweiten Leiterplatte 3 ist eine Impedanz des zweiten Strompfades größer als eine Impedanz des ersten Strompfades. Hieraus ergibt sich, dass die dritte Leiterplatte 5 mit einem Abstand in Vertikalrichtung 8 zur ersten Leiterplatte 2 angeordnet ist, der größer ist als der Abstand zwischen der dritten Leiterplatte 5 und der zweiten Leiterplatte 3 in Vertikalrichtung 8. Hierdurch wird in vorteilhafter Weise erreicht, dass trotz der unterschiedlichen Impedanzen des ersten und des zweiten Strompfades und der daraus resultierenden unsymmetrischen Verteilung von Stromstärken die auf die dritte Leiterplatte 5 wirkende Stromkraft kompensiert wird.

Die in Fig. 1a bis 5a dargestellten Schrauben dienen hierbei der Abstützung von auf die erste und die zweite Leiterplatte 2, 3 wirkenden Stromkräfte, die jeweils von der dritten Leiterplatte 5 auf diese Leiterplatten 2, 3 ausgeübt wird. Wie vorhergehend erläutert, wird bei einem in entgegengesetzten Richtungen fließenden Strom I sowohl eine abstoßende Kraft auf die dritte Leiterplatte 5 als auch auf die erste bzw. zweite Leiterplatte 2, 3 erzeugt. Somit wird die erste Leiterplatte 2 von der dritten Leiterplatte 5 in der z.B. in Fig. 5a dargestellten Vertikalrichtung 8 abgestoßen, während die zweite Leiterplatte 3 von der dritten Leiterplatte 5 entgegen der in Fig. 5a dargestellten Vertikalrichtung 8 abgestoßen wird. Durch die Schrauben 13 können diese abstoßenden Kräfte derart zwischen der ersten und der zweiten Leiterplatte 2, 3 übertragen werden, dass diese sich zumindest teilweise, vorzugsweise jedoch vollständig, aufheben. Hierdurch ergibt sich in vorteilhafter Weise eine besonders stabile Anordnung der Stromschienenanordnung 1. Hierbei wird davon ausgegangen, dass auch in den in Fig. 1a und Fig. 2a dargestellten Ausführungsformen die Schrauben 14 zur mechanischen und elektrischen Verbindung der ersten und der zweiten Leiterplatte 2, 3 dienen können, wie insbesondere mit Bezug auf Fig. 3a detailliert erläutert.

In Fig. 6 ist ein Querschnitt durch eine Stromschienenanordnung 1 in einer sechsten Ausführungsform dargestellt. Dargestellt ist eine erste Leiterplatte 2, eine zweite Leiterplatte 3 und eine dritte Leiterplatte 5, die parallel angeordnet sind, wobei die dritte Leiterplatte 5 zwischen der ersten und der zweiten Leiterplatte 2, 3 angeordnet ist. Weiter dargestellt ist eine Abstandshalteranordnung 16, die einen Verbindungskanal 17 aufweist. Die Abstandshalteranordnung 16 erstreckt sich durch eine Öffnung 18 der dritten Leiterplatte 5. In dem Verbindungskanal 17 ist eine z.B. in Fig. 5a dargestellte Schraube 13 anordenbar, mittels derer dann die erste Leiterplatte 2 und die zweite Leiterplatte 3 mechanisch sowie elektrisch verbunden sind. Die Abstandshalteranordnung 16 bildet hierbei z.B. die in Fig. 5b dargestellten ersten Abstandshalter 14 und zweiten Abstandshalter 15 aus. Weiter dargestellt sind Isolatoren 19, mittels derer die zweite Leiterplatte 3 an einer Haltevorrichtung befestigt werden können. Auch dargestellt sind Öffnungen 20 der Abstandshalteranordnung 16, mittels derer die Abstandshalteranordnung 16 z.B. mit der dritten Leiterplatte 5 verschraubt werden kann. Auch dargestellt ist ein Loch 21 in der dritten Leiterplatte 5, durch das z.B. die dritte Leiterplatte 5 mit dem zweiten Anschluss 12 (siehe z.B. Fig. 5a) verschraubt werden kann.

Weiter dargestellt ist ein Kupferrohr 22, welches zwischen der zweiten Leiterplatte 3 und der ersten Leiterplatte 2 angeordnet ist und welches sich durch eine nicht dargestellte Öffnung der dritten Leiterplatte 5 erstreckt und somit die erste Leiterplatte 2 mit der zweiten Leiterplatte 3 elektrisch verbindet. Das Kupferrohr 22 dient hierbei insbesondere der Herstellung einer Niederimpedanz-Verbindung zwischen der ersten und der zweiten Leiterplatte 2, 3. Somit kann in vorteilhafter Weise eine Impedanz der vorhergehend erläuterten Strompfade angepasst werden. Im Inneren des Kupferrohrs 22 befindet sich eine nicht dargestellte Schraube, welche sowohl der Herstellung eines elektrisch gut leitenden Kontaktes zwischen der zweiten Leiterplatte 3 und der ersten Leiterplatte 2 sowie dem Kupferrohr 22 dient und außerdem einen Teil der Stromkräfte aufnehmen kann.

In Fig. 6 ist dargestellt, dass, wie in Fig. 5b, die dritte Leiterplatte 5 au ßermittig zwischen der ersten und der zweiten Leiterplatte 2, 3 angeordnet ist.

Die in den Fig. 1a bis 6 dargestellten Ausführungsformen der Stromschienenanordnung 1 stellen somit in vorteilhafter Weise ein zweipoliges, niederinduktives Stromschienensystem bereit, welches derart gestaltet ist, dass Stromkräfte bei einem Kurzschluss, welche die Leiterplatten 2, 3, 5 auseinander treiben, reduziert werden können. Hierbei ist es möglich, durch die konstruktive Gestaltung der Stromschienenanordnung 1 die frequenzabhängigen Größen des elektrischen Widerstandes und der Induktivität auf gewünschte Größen anzupassen.

Die erste und die zweite Leiterplatte 2, 3 können durch elektrisch leitende Verbindungselemente, wie z.B. mit Bezug auf Fig. 6 erläutert, elektrisch verbunden sein. Hierbei können neben runden Rohrformen auch rechteckige Rohrformen oder Verbindungen mit anderen Formfaktoren zur elektrischen Verbindung verwendet werden.

Eine Anordnung der mechanischen Verbindungselemente zwischen der ersten und der zweiten Leiterplatte 2, 3 wird vorzugsweise derart gewählt, dass diese im Bereich der maximal auftretenden Stromkräfte, insbesondere im Fall eines Kurzschlusses, angeordnet sind. Die höchsten Stromkräfte treten hierbei im Bereich der Anschlüsse 9, 10, 11, 12 und der elektrischen Verbindungselemente, z.B. im Bereich des Kupferrohres 22 (siehe Fig. 6) auf.

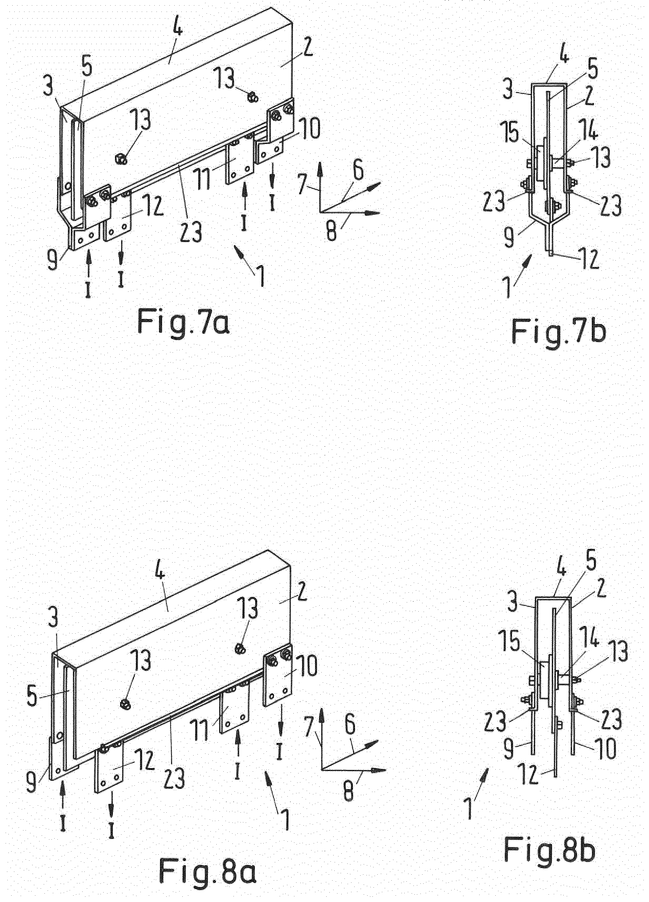

Fig. 7a zeigt eine perspektivische Ansicht einer Stromschienenanordnung 1 in einer siebten Ausführungsform. Hierbei entspricht der Aufbau der in Fig. 7a dargestellten Stromschienenanordnung 1 im Wesentlichen der in Fig. 1a dargestellten Stromschienenanordnung 1. Als Unterschied zu der in Fig. 1a dargestellten Ausführungsform ergibt sich, dass in Querrichtung 7 untere Längskanten 23 der ersten Leiterplatte 2 und der zweiten Leiterplatte 3 abgewinkelt ausgebildet sind. Die Längskanten 23 bezeichnen hierbei die Kanten der Leiterplatten 2, 3, die sich parallel zur Längsrichtung 6 erstrecken. Es ist möglich, dass die Längskanten 23 entlang der gesamten Länge der Leiterplatten 2, 3 oder nur in einem Bereich zwischen dem ersten und dem zweiten Anschluss 9, 10 abgewinkelt ausgebildet sind.

In Fig. 7b ist dargestellt, dass die Längskanten 23 in einem Querschnitt in einer Ebene senkrecht zur Längsrichtung 6 mit einem vorbestimmten Winkel, insbesondere mit einem Winkel von 90°, abgewinkelt sein können. Abgewinkelt bedeutet hierbei, dass die Längskante 23 der ersten Leiterplatte 2 einen Abschnitt aufweist, der sich mit einem vorbestimmten Winkel zur einer Ebene der ersten Leiterplatte 2, die senkrecht zur Vertikalrichtung 8 orientiert ist, von dieser Ebene und der dritten Leiterplatte 5 weg erstreckt. Die Längskante 23 der zweiten Leiterplatte 3 weist entsprechend einen Abschnitt auf, der sich mit einem vorbestimmten Winkel zur Ebene der zweiten Leiterplatte 3, die senkrecht zur Vertikalrichtung 8 orientiert ist, von dieser Ebene und der dritten Leiterplatte 5 weg erstreckt.

Wie Simulationen gezeigt haben, ergibt die abgewinkelte Ausführungsform in vorteilhafter Weise eine hohe Versteifung der in Fig. 7a und Fig. 7b dargestellten Stromschienenanordnung 1 und somit eine hohe Robustheit gegenüber wirkenden Stromkräften.

Fig. 8a zeigt eine perspektivische Ansicht einer Stromschienenanordnung 1 in einer achten Ausführungsform. Hierbei entspricht der Aufbau der in Fig. 8a dargestellten Stromschienenanordnung 1 im Wesentlichen der in Fig. 2a dargestellten Stromschienenanordnung 1. Als Unterschied zu der in Fig. 2a dargestellten Ausführungsform ergibt sich wiederum, dass, wie bei der in Fig. 7a dargestellten Stromschienenanordnung 1, in Querrichtung 7 untere Längskanten 23 der ersten Leiterplatte 2 und der zweiten Leiterplatte 3 abgewinkelt ausgebildet sind. Die Längskanten 23 bezeichnen hierbei die Kanten der Leiterplatten 2, 3, die sich parallel zur Längsrichtung 6 erstrecken. Es ist möglich, dass die Längskanten 23 entlang der gesamten Länge der Leiterplatten 2, 3 oder nur in einem Bereich zwischen dem ersten und dem zweiten Anschluss 9, 10 abgewinkelt ausgebildet sind.

In Fig. 8b ist dargestellt, dass die Längskanten 23 in einem Querschnitt in einer Ebene senkrecht zur Längsrichtung 6 mit einem vorbestimmten Winkel, insbesondere mit einem Winkel von 90°, abgewinkelt sein können.

Wie auch bei der in Fig. 7a dargestellten Stromschienenanordnung 1 ergibt die abgewinkelte Ausführungsform in vorteilhafter Weise eine hohe Versteifung der in Fig. 8a und Fig. 8b dargestellten Stromschienenanordnung 1 und somit eine hohe Robustheit gegenüber wirkenden Stromkräften.

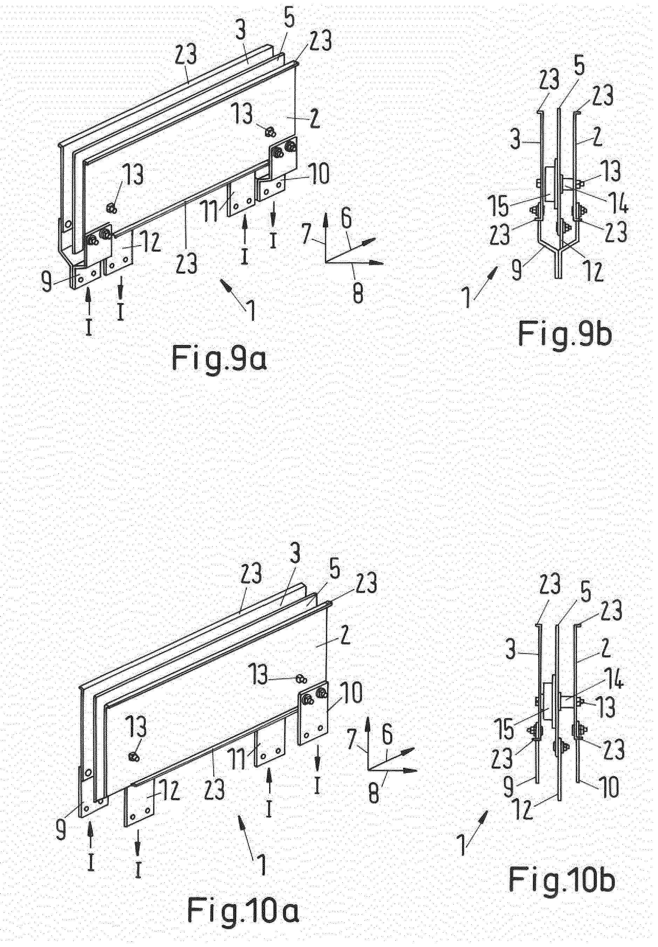

Fig. 9a zeigt eine perspektivische Ansicht einer Stromschienenanordnung 1 in einer neunten Ausführungsform. Hierbei entspricht der Aufbau der in Fig. 9a dargestellten Stromschienenanordnung 1 im Wesentlichen der in Fig. 3a dargestellten Stromschienenanordnung 1. Als Unterschied zu der in Fig. 3a dargestellten Ausführungsform ergibt sich jedoch, dass in Querrichtung 7 untere und obere Längskanten 23 der ersten Leiterplatte 2 und der zweiten Leiterplatte 3 abgewinkelt ausgebildet sind. Die Längskanten 23 bezeichnen hierbei die Kanten der Leiterplatten 2, 3, die sich parallel zur Längsrichtung 6 erstrecken. Es ist möglich, dass die Längskanten 23 entlang der gesamten Länge der Leiterplatten 2, 3 oder nur in einem Bereich zwischen dem ersten und dem zweiten Anschluss 9, 10 abgewinkelt ausgebildet sind. Insbesondere können die in Querrichtung 7 oberen Längskanten 23 entlang der gesamten Länge in Längsrichtung 6 der Leiterplatten 2, 3 abgewinkelt ausgebildet sein, wobei die in Querrichtung 7 unteren Längskanten 23 nur in einem Bereich zwischen dem ersten und dem zweiten Anschluss 9, 10 abgewinkelt ausgebildet sind.

In Fig. 9b ist dargestellt, dass die vier Längskanten 23 in einem Querschnitt in einer Ebene senkrecht zur Längsrichtung 6 mit einem vorbestimmten Winkel, insbesondere mit einem Winkel von 90°, abgewinkelt sein können.

Wie auch bei der in Fig. 7a dargestellten Stromschienenanordnung 1 ergibt die abgewinkelte Ausführungsform in vorteilhafter Weise eine hohe Versteifung der in Fig. 9a und Fig. 9b dargestellten Stromschienenanordnung 1 und somit eine hohe Robustheit gegenüber wirkenden Stromkräften.

Fig. 10a zeigt eine perspektivische Ansicht einer Stromschienenanordnung 1 in einer zehnten Ausführungsform. Hierbei entspricht der Aufbau der in Fig. 10a dargestellten Stromschienenanordnung 1 im Wesentlichen der in Fig. 4a dargestellten Stromschienenanordnung 1. Als Unterschied zu der in Fig. 4a dargestellten Ausführungsform ergibt sich jedoch, dass in Querrichtung 7 untere und obere Längskanten 23 der ersten Leiterplatte 2 und der zweiten Leiterplatte 3 abgewinkelt ausgebildet sind. Die Längskanten 23 bezeichnen hierbei die Kanten der Leiterplatten 2, 3, die sich parallel zur Längsrichtung 6 erstrecken. Es ist möglich, dass die Längskanten 23 entlang der gesamten Länge der Leiterplatten 2, 3 oder nur in einem Bereich zwischen dem ersten und dem zweiten Anschluss 9, 10 abgewinkelt ausgebildet sind. Insbesondere können die in Querrichtung 7 oberen Längskanten 23 entlang der gesamten Länge in Längsrichtung 6 der Leiterplatten 2, 3 abgewinkelt ausgebildet sein, wobei die in Querrichtung 7 unteren Längskanten 23 nur in einem Bereich zwischen dem ersten und dem zweiten Anschluss 9, 10 abgewinkelt ausgebildet sind.

In Fig. 10b ist dargestellt, dass die vier Längskanten 23 in einem Querschnitt in einer Ebene senkrecht zur Längsrichtung 6 mit einem vorbestimmten Winkel, insbesondere mit einem Winkel von 90°, abgewinkelt sein können.

Wie auch bei der in Fig. 7a dargestellten Stromschienenanordnung 1 ergibt die abgewinkelte Ausführungsform in vorteilhafter Weise eine hohe Versteifung der in Fig. 10a und Fig. 10b dargestellten Stromschienenanordnung 1 und somit eine hohe Robustheit gegenüber wirkenden Stromkräften.

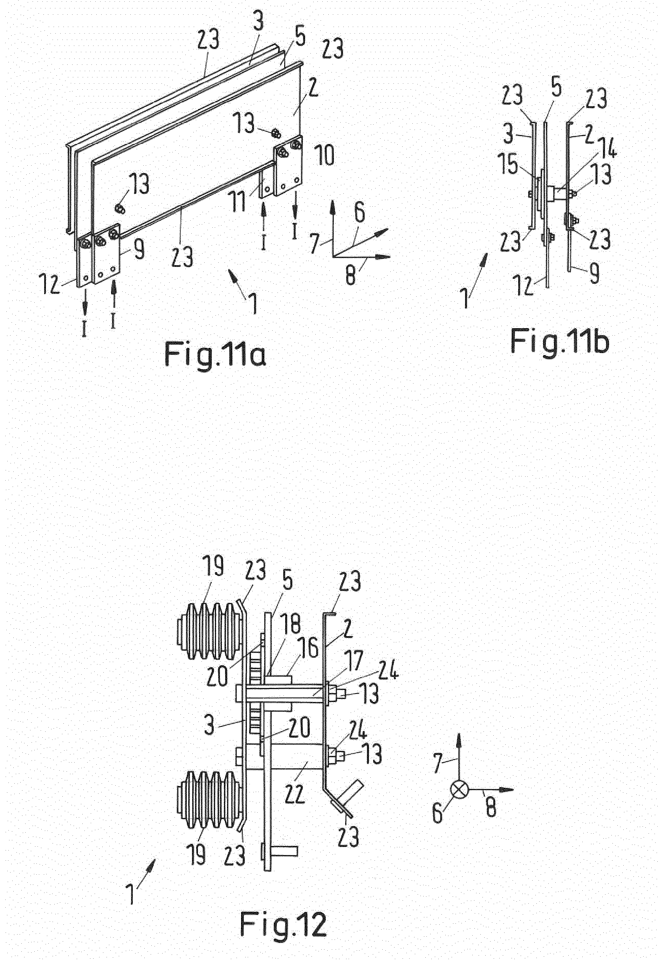

Fig. 11a zeigt eine perspektivische Ansicht einer Stromschienenanordnung 1 in einer elften Ausführungsform. Hierbei entspricht der Aufbau der in Fig. 11a dargestellten Stromschienenanordnung 1 im Wesentlichen der in Fig. 5a dargestellten Stromschienenanordnung 1. Als Unterschied zu der in Fig. 5a dargestellten Ausführungsform ergibt sich jedoch, dass in Querrichtung 7 untere und obere Längskanten 23 der ersten Leiterplatte 2 und der zweiten Leiterplatte 3 abgewinkelt ausgebildet sind. Die Längskanten 23 bezeichnen hierbei die Kanten der Leiterplatten 2, 3, die sich parallel zur Längsrichtung 6 erstrecken. Es ist möglich, dass die Längskanten 23 entlang der gesamten Länge der Leiterplatten 2, 3 oder nur in einem Bereich zwischen dem ersten und dem zweiten Anschluss 9, 10 abgewinkelt ausgebildet sind. Insbesondere können die in Querrichtung 7 oberen Längskanten 23 entlang der gesamten Länge in Längsrichtung 6 der Leiterplatten 2, 3 abgewinkelt ausgebildet sein, wobei die in Querrichtung 7 unteren Längskanten 23 nur in einem Bereich zwischen dem ersten und dem zweiten Anschluss 9, 10 abgewinkelt ausgebildet sind.

In Fig. 11b ist dargestellt, dass die vier Längskanten 23 in einem Querschnitt in einer Ebene senkrecht zur Längsrichtung 6 mit einem vorbestimmten Winkel, insbesondere mit einem Winkel von 90°, abgewinkelt sein können.

Wie auch bei der in Fig. 7a dargestellten Stromschienenanordnung 1 ergibt die abgewinkelte Ausführungsform in vorteilhafter Weise eine hohe Versteifung der in Fig. 11a und Fig. 11b dargestellten Stromschienenanordnung 1 und somit eine hohe Robustheit gegenüber wirkenden Stromkräften.

Fig. 12 zeigt einen Querschnitt durch eine Stromschienenanordnung 1 in einer zwölften Ausführungsform. Hierbei entspricht der Aufbau der in Fig. 12 dargestellten Stromschienenanordnung 1 im Wesentlichen der in Fig. 6 dargestellten Stromschienenanordnung 1. Als Unterschied zu der in Fig. 6 dargestellten Ausführungsform ergibt sich jedoch, dass in Querrichtung 7 untere und obere Längskanten 23 der ersten Leiterplatte 2 und der zweiten Leiterplatte 3 abgewinkelt ausgebildet sind. Die Längskanten 23 bezeichnen hierbei die Kanten der Leiterplatten 2, 3, die sich parallel zur Längsrichtung 6 erstrecken. Es ist möglich, dass die Längskanten 23 entlang der gesamten Länge der Leiterplatten 2, 3 oder nur in einem Bereich zwischen dem ersten und dem zweiten Anschluss 9, 10 abgewinkelt ausgebildet sind. Insbesondere können die in Querrichtung 7 oberen Längskanten 23 entlang der gesamten Länge in Längsrichtung 6 der Leiterplatten 2, 3 abgewinkelt ausgebildet sein, wobei die in Querrichtung 7 unteren Längskanten 23 nur in einem Bereich zwischen dem ersten und dem zweiten Anschluss 9, 10 abgewinkelt ausgebildet sind.

In Fig. 12 ist dargestellt, dass die in Querrichtung 7 obere Längskante 23 der ersten Leiterplatte 2 mit einem Winkel von 90° abgewinkelt ist, wobei die in Querrichtung 7 untere Längskante 23 der ersten Leiterplatte 2 mit einem Winkel kleiner als 90°, z.B. 45°, abgewinkelt ist. Die in Querrichtung 7 untere und obere Längskante 23 der zweiten Leiterplatte 3 sind mit einem Winkel kleiner als 90°, z.B. 20°, abgewinkelt. Hierdurch wird in vorteilhafter Weise die Montage weiterer Bauteile, wie z.B. der Isolatoren 19, ermöglicht.

Weiter ist in Fig. 12 dargestellt, dass als mechanische Verbindungsmittel ausgebildete Schrauben 13 sowohl innerhalb der Abstandshalteranordnung 16 als auch innerhalb des als elektrischen Verbindungsmittels ausgebildeten Kupferrohres 22 angeordnet sind und sich somit durch Öffnungen 18 der dritten Leiterplatte 5 erstrecken. Die Schrauben 13 bilden mit Schraubenmuttern 24 jeweils eine Schraubverbindung zwischen der ersten und der zweiten Leiterplatte 2, 3 aus.

## Patentansprüche

1. Stromschienenanordnung, wobei die Stromschienenanordnung (1) eine erste Leiterstruktur und eine zweite Leiterstruktur umfasst, wobei die erste Leiterstruktur und die zweite Leiterstruktur nicht unmittelbar elektrisch verbunden sind,
wobei die erste Leiterstruktur eine erste Teilleiterstruktur und eine zweite Teilleiterstruktur umfasst, wobei die erste Teilleiterstruktur und die zweite Teilleiterstruktur elektrisch verbunden sind, wobei die erste und die zweite Teilleiterstruktur derart ausgebildet und relativ zur zweiten Leiterstruktur angeordnet sind, dass eine erste Stromkraft zwischen der ersten Teilleiterstruktur und der zweiten Leiterstruktur eine zweite Stromkraft zwischen der zweiten Teilleiterstruktur und der zweiten Leiterstruktur zumindest teilweise kompensiert,
wobei die erste Teilleiterstruktur als erste Leiterplatte (2) ausgebildet ist, wobei die zweite Teilleiterstruktur als zweite Leiterplatte (3) ausgebildet ist, wobei die zweite Leiterstruktur als dritte Leiterplatte (5) ausgebildet ist, wobei die erste, die zweite und die dritte Leiterplatte (2, 3, 5) parallel und mit einem vorbestimmten Abstand zueinander angeordnet sind, wobei die dritte Leiterplatte (5) zwischen der ersten und der zweiten Leiterplatte (2, 3) angeordnet ist, wobei zwischen der ersten Leiterplatte (2) und der dritten Leiterplatte (5) ein erster Abstandshalter (14) und zwischen der zweiten Leiterplatte (3) und der dritten Leiterplatte (5) ein zweiter Abstandshalter (15) angeordnet ist, wobei
die erste Leiterplatte (2) und die zweite Leiterplatte (3) mechanisch miteinander verbunden sind, wobei die erste Leiterplatte (2) und die zweite Leiterplatte (3) durch mindestens ein Verbindungsmittel verbunden sind, wobei sich das Verbindungsmittel durch eine Öffnung (18) der dritten Leiterplatte (5) erstreckt,
**dadurch gekennzeichnet, dass**
sich ein Teil einer Abstandshalteranordnung (16) durch die Öffnung (18) der dritten Leiterplatte (5) erstreckt, wobei die Abstandshalteranordnung (16) den ersten Abstandshalter (14) und den zweiten Abstandshalter (15) umfasst oder ausbildet.

2. Stromschienenanordnung nach Anspruch 1, **dadurch gekennzeichnet, dass** die erste und die zweite Teilleiterstruktur derart ausgebildet und relativ zur zweiten Leiterstruktur angeordnet sind, dass die erste Stromkraft die zweite Stromkraft zumindest teilweise kompensiert, falls die erste Leiterstruktur und die zweite Leiterstruktur kurzgeschlossen sind und/oder ein Stromfluss durch die erste Leiterstruktur und die zweite Leiterstruktur eine vorbestimmte Frequenz aufweist.

3. Stromschienenanordnung nach einem der Ansprüche 1 bis 2, **dadurch gekennzeichnet, dass** die erste und die zweite Leiterplatte (2, 3) über eine Verbindungsplatte (4) verbunden sind, wobei die Verbindungsplatte (4) derart angeordnet ist, dass die Anordnung aus der ersten und der zweiten Leiterplatte (2, 3) sowie der Verbindungsplatte (4) eine U-Profil aufweist.

4. Stromschienenanordnung nach einem der vorangegangenen Ansprüche, **dadurch gekennzeichnet, dass** das Verbindungsmittel in einem Verbindungskanal (17) der Abstandshalteranordnung (16) angeordnet ist.

5. Stromschienenanordnung nach einem der Ansprüche 1 bis 4, **dadurch gekennzeichnet, dass** eine Höhe der zweiten Leiterplatte (3) verschieden von einer Höhe der ersten Leiterplatte (2) ist.

6. Verfahren zur Herstellung einer Stromschienenanordnung, umfassend folgende Verfahrensschritte:
- Bereitstellen einer ersten und einer zweiten Teilleiterstruktur, wobei die erste Teilleiterstruktur als erste Leiterplatte (2) ausgebildet ist, wobei die zweite Teilleiterstruktur als zweite Leiterplatte (3) ausgebildet ist,
- elektrisches Verbinden der ersten und der zweiten Teilleiterstruktur,
- Bereitstellen einer zweiten Leiterstruktur, wobei die zweite Leiterstruktur als dritte Leiterplatte (5) ausgebildet ist,
- Anordnen der von der ersten und zweiten Teilleiterstruktur gebildeten ersten Leiterstruktur und der zweiten Leiterstruktur zueinander derart, dass eine erste Stromkraft zwischen der ersten Teilleiterstruktur und der zweiten Leiterstruktur eine zweite Stromkraft zwischen der zweiten Teilleiterstruktur und der zweiten Leiterstruktur zumindest teilweise kompensiert,
- Anordnen der ersten, der zweiten und der dritten Leiterplatte (2, 3, 5) parallel und mit einem vorbestimmten Abstand zueinander,
- Anordnen der dritten Leiterplatte (5) zwischen der ersten und der zweiten Leiterplatte (2, 3),
- Anordnen eines ersten Abstandshalters (14) zwischen der ersten Leiterplatte (2) und der dritten Leiterplatte (5) und eines zweiten Abstandshalters (15) zwischen der zweiten Leiterplatte (3) und der dritten Leiterplatte (5),
- mechanisches Verbinden der ersten Leiterplatte (2) und der zweiten Leiterplatte (3) miteinander, wobei die erste Leiterplatte (2) und die zweite Leiterplatte (3) durch mindestens ein Verbindungsmittel verbunden sind, wobei sich das Verbindungsmittel durch eine Öffnung (18) der dritten Leiterplatte (5) erstreckt, **dadurch gekennzeichnet, dass** sich ein Teil einer Abstandshalteranordnung (16) durch die Öffnung (18) der dritten Leiterplatte (5) erstreckt, wobei die Abstandshalteranordnung (16) den ersten Abstandshalter (14) und den zweiten Abstandshalter (15) umfasst oder ausbildet.

## Claims

1. A busbar assembly, the busbar assembly (1) comprising a first conductor structure and a second conductor structure, the first conductor structure and the second conductor structure not being directly electrically connected to one another, the first conductor structure comprising a first sub-conductor structure and a second sub-conductor structure, the first sub-conductor structure and the second sub-conductor structure being electrically connected, the first and second sub-conductor structures being designed and arranged relative to the second conductor structure in such a way that a first current force between the first sub-conductor structure and the second conductor structure at least partially compensates for a second current force between the second sub-conductor structure and the second conductor structure,
the first sub-conductor structure being designed as a first conductor plate (2), the second sub-conductor structure being designed as a second conductor plate (3), the second conductor structure being designed as a third conductor plate (5), the first, second and third conductor plates (2, 3, 5) being arranged parallel to and with a predetermined distance from one another, the third conductor plate (5) being arranged between the first and second conductor plates (2, 3), a first spacer (14) being arranged between the first conductor plate (2) and the third conductor plate (5), and a second spacer (15) being arranged between the second conductor plate (3) and the third conductor plate (5),
the first conductor plate (2) and the conductor plate (3) being mechanically connected to one another, the first conductor plate (2) and the second conductor plate (3) being connected by at least one connecting means, the connecting means extending through an opening (18) of the third conductor plate (5),
**characterized in that**
a portion of a spacer assembly (16) extends through the opening (18) of the third conductor plate (5), the spacer assembly (16) comprising or forming the first spacer (14) and the second spacer (15).

2. The busbar assembly according to claim 1, **characterized in that** the first and second sub-conductor structures are designed and arranged relative to the second conductor structure in such a way that the first current force at least partially compensates for the second current force if the first conductor structure and the second conductor structure are short-circuited and/or a current flow through the first conductor structure and the second conductor structure has a predetermined frequency.

3. The busbar assembly according to any one of claims 1 to 2, **characterized in that** the first and second conductor plates (2, 3) are connected by way of a connecting plate (4), the connecting plate (4) being arranged in such a way that the assembly comprising the first and second conductor plates (2, 3) and the connecting plate (4) has a U-shaped profile.

4. The busbar assembly according to any one of the preceding claims, **characterized in that** the connecting means is arranged in a connecting channel (17) of the spacer assembly (16).

5. The busbar assembly according to any one of claims 1 to 4, **characterized in that** a height of the second conductor plate (3) is different from a height of the first conductor plate (2).

6. A method for producing a busbar assembly, comprising the following steps:
- providing a first and a second sub-conductor structure, the first sub-conductor structure being designed as a first conductor plate (2), the second sub-conductor structure being designed as a second conductor plate (3);
- electrically connecting the first and second sub-conductor structures;
- providing a second conductor structure, the second conductor structure being designed as a third conductor plate (5);
- arranging the first conductor structure formed by the first and second sub-conductor structures and the second conductor structure with respect to one another in such a way that a first current force between the first sub-conductor structure and the second conductor structure at least partially compensates for a second current force between the second sub-conductor structure and the second conductor structure;
- arranging the first, second and third conductor plates (2, 3, 5) parallel to and with a predetermined distance from one another;
- arranging the third conductor plate (5) between the first and second conductor plates (2, 3);
- arranging a first spacer (14) between the first conductor plate (2) and the third conductor plate (5), and a second spacer (15) between the second conductor plate (3) and the third conductor plate (5); and
- mechanically connecting the first conductor plate (2) and the second conductor plate (3) to one another, the first conductor plate (2) and the second conductor plate (3) being connected by at least one connecting means, the connecting means extending through an opening (18) of the third conductor plate (5), a portion of a spacer assembly (16) extending through the opening (18) of the third conductor plate (5), and the spacer assembly (16) comprising or forming the first spacer (14) and the second spacer (15).

## Revendications

1. Ensemble rail conducteur, dans lequel l'ensemble rail conducteur (1) comporte une première structure conductrice et une seconde structure conductrice, dans lequel la première structure conductrice et la seconde structure conductrice ne sont pas reliées électriquement directement,
dans lequel la première structure conductrice comporte une première structure conductrice partielle et une seconde structure conductrice partielle, dans lequel la première structure conductrice partielle et la seconde structure conductrice partielle sont reliées électriquement, dans lequel la première et la seconde structure conductrice partielle sont réalisées et agencées par rapport à la seconde structure conductrice de telle manière qu'une première force de courant entre la première structure conductrice partielle et la seconde structure conductrice compense au moins partiellement une seconde force de courant entre la seconde structure conductrice partielle et la seconde structure conductrice, dans lequel la première structure conductrice partielle est réalisée comme une première plaque conductrice (2), dans lequel la seconde structure conductrice partielle est réalisée comme une deuxième plaque conductrice (3), dans lequel la seconde structure conductrice est réalisée comme une troisième plaque conductrice (5), dans lequel la première, la deuxième et la troisième plaque conductrice (2, 3, 5) sont agencées parallèlement et à une distance prédéterminée les unes des autres, dans lequel la troisième plaque conductrice (5) est agencée entre la première et la deuxième plaque conductrice (2, 3), dans lequel un premier espaceur (14) est agencé entre la première plaque conductrice (2) et la troisième plaque conductrice (5) et un second espaceur (15) est agencé entre la deuxième plaque conductrice (3) et la troisième plaque conductrice (5), dans lequel
la première plaque conductrice (2) et la deuxième plaque conductrice (3) sont reliées mécaniquement entre elles, dans lequel la première plaque conductrice (2) et la seconde plaque conductrice (3) sont reliées par au moins un moyen de liaison, dans lequel le moyen de liaison s'étend au travers d'une ouverture (18) de la troisième plaque conductrice (5),
**caractérisé en ce que**
une partie d'un agencement d'espaceurs (16) s'étend au travers de l'ouverture (18) de la troisième plaque conductrice (5), dans lequel l'agencement d'espaceurs (16) comporte ou réalise le premier espaceur (14) et le second espaceur (15).

2. Ensemble rail conducteur selon la revendication 1, **caractérisé en ce que** la première et la seconde structure conductrice partielle sont réalisées et agencées par rapport à la seconde structure conductrice de telle manière que la première force de courant compense au moins partiellement la seconde force de courant si la première structure conductrice et la seconde structure conductrice sont court-circuitées et/ou un flux de courant par la première structure conductrice et la seconde structure conductrice présente une fréquence prédéterminée.

3. Ensemble rail conducteur selon l'une des revendications 1 et 2, **caractérisé en ce que** la première et la deuxième plaque conductrice (2, 3) sont reliées par une plaque de liaison (4), dans lequel la plaque de liaison (4) est agencée de telle manière que l'agencement de la première et de la deuxième plaque conductrice (2, 3) ainsi que de la plaque de liaison (4) présente un profil en U.

4. Ensemble rail conducteur selon l'une des revendications précédentes, **caractérisé en ce que** le moyen de liaison est agencé dans un canal de liaison (17) de l'agencement d'espaceurs (16).

5. Ensemble rail conducteur selon l'une des revendications 1 à 4, **caractérisé en ce qu'**une hauteur de la deuxième plaque conductrice (3) est différente d'une hauteur de la première plaque conductrice (2).

6. Procédé de fabrication d'un ensemble rail conducteur, comprenant les étapes de procédé suivantes :
- la mise à disposition d'une première et d'une seconde structure conductrice partielle, dans lequel la première structure conductrice partielle est réalisée comme une première plaque conductrice (2), dans lequel la seconde structure conductrice partielle est réalisée comme deuxième plaque conductrice (3),
- la liaison électrique de la première et de la seconde structure conductrice partielle,
- la mise à disposition d'une seconde structure conductrice, dans lequel la seconde structure conductrice est réalisée comme une troisième plaque conductrice (5),
- l'agencement de la première structure conductrice formée par la première et seconde structure conductrice partielle et de la seconde structure conductrice l'une par rapport à l'autre de telle manière qu'une première force de courant entre la première structure conductrice partielle et la seconde structure conductrice compense au moins partiellement une seconde force de courant entre la seconde structure conductrice partielle et la seconde structure conductrice,
- l'agencement de la première, de la deuxième et la troisième plaque conductrice (2, 3, 5) parallèlement et à une distance prédéterminée les unes des autres,
- l'agencement de la troisième plaque conductrice (5) entre la première et la deuxième plaque conductrice (2, 3),
- l'agencement d'un premier espaceur (14) entre la première plaque conductrice (2) et la troisième plaque conductrice (5) et d'un second espaceur (15) entre la deuxième plaque conductrice (3) et la troisième plaque conductrice (5),
- la liaison mécanique de la première plaque conductrice (2) et la deuxième plaque conductrice (3) entre elles, dans lequel la première plaque conductrice (2) et la deuxième plaque conductrice (3) sont reliées par au moins un moyen de liaison, dans lequel le moyen de liaison s'étend au travers d'une ouverture (18) de la troisième plaque conductrice (5), **caractérisé en ce qu'**une partie d'un agencement d'espaceurs (16) s'étend au travers de l'ouverture (18) de la troisième plaque conductrice (5), dans lequel l'agencement d'espaceurs (16) comporte ou réalise le premier espaceur (14) et le second espaceur (15).
